(19) Europäisches Patentamt / European Patent Office / Office européen des brevets

(11) **EP 3 370 857 B1**

(12) **FASCICULE DE BREVET EUROPEEN**

(45) Date de publication et mention
de la délivrance du brevet:
**01.01.2025 Bulletin 2025/01**

(21) Numéro de dépôt: **16791567.7**

(22) Date de dépôt: **03.11.2016**

(51) Classification Internationale des Brevets (IPC):
**B01J 2/04** (2006.01)     **B01J 2/10** (2006.01)
**B01J 2/16** (2006.01)     **B01J 2/18** (2006.01)

(52) Classification Coopérative des Brevets (CPC):
**B01J 2/04; B01J 2/10; B01J 2/16; B01J 2/18**

(86) Numéro de dépôt international:
**PCT/EP2016/076513**

(87) Numéro de publication internationale:
**WO 2017/076950 (11.05.2017 Gazette 2017/19)**

(54) **DISPOSITIF DE GRANULATION DE POUDRES PAR ATOMISATION CRYOGÉNIQUE**

VORRICHTUNG ZUM GRANULIEREN VON PULVERN DURCH KRYOGENE ZERSTÄUBUNG

DEVICE FOR GRANULATING POWDERS BY CRYOGENIC ATOMISATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2015 FR 1560568**

(43) Date de publication de la demande:
**12.09.2018 Bulletin 2018/37**

(73) Titulaire: **Commissariat à l'Energie Atomique et aux Energies Alternatives**
**75015 Paris (FR)**

(72) Inventeurs:
 • **BROTHIER, Méryl**
   **13090 Aix-en-Provence (FR)**
 • **VAUDEZ, Stéphane**
   **84000 Avignon (FR)**

(74) Mandataire: **Brevalex**
**Tour Trinity**
**1 B Place de la Défense**
**92400 Courbevoie (FR)**

(56) Documents cités:
EP-A1- 0 945 173     BE-A- 690 085
US-A- 3 321 560     US-A1- 2014 000 297

# Description

## DOMAINE TECHNIQUE

La présente invention se rapporte au domaine de la préparation de milieux granulaires, et plus précisément à la granulation de poudres, notamment de poudres d'actinides, pour obtenir des granulés par atomisation cryogénique.

De manière privilégiée, elle s'applique à l'atomisation de poudres ne devant pas être mises en contact avec un liquide, notamment de l'eau, notamment pour des raisons de contamination de ces poudres par le liquide, pour des raisons d'instabilité des poudres, voire encore pour des raisons de risque de criticité dans le cas de l'utilisation de poudres radioactives.

L'invention trouve préférentiellement son application pour la granulation de poudres d'actinides permettant la formation de combustible nucléaire, notamment des pastilles de combustible nucléaire.

L'invention propose ainsi un dispositif de granulation de poudres par atomisation cryogénique, ainsi qu'un procédé de granulation de poudres associé.

## ÉTAT DE LA TECHNIQUE ANTÉRIEURE

La mise en oeuvre des différentes étapes de préparation d'un milieu granulaire, en particulier à partir de poudres d'actinides pour former des pastilles de combustible nucléaire après mise en forme par pressage, est essentielle car elle conditionne majoritairement la maîtrise de la microstructure du produit final mais aussi la présence ou non de défauts d'aspects macroscopiques au sein d'une pastille de combustible. En particulier, le mélange de poudres d'actinides pour permettre la production de combustible nucléaire constitue une étape clé dans la maîtrise de la qualité de la pastille de combustible obtenue, qui le plus souvent est soumise au respect d'exigences sévères en termes de microstructure et d'impuretés.

Le procédé industriel, classique et historique de métallurgie des poudres appliqué à l'élaboration de combustible nucléaire s'appuie sur des étapes de mélange, broyage et/ou granulation, toutes réalisées en voie sèche. En effet, la mise en oeuvre de liquide dans l'industrie nucléaire induit la génération d'effluents pouvant être difficiles à traiter. Aussi, pour la préparation d'un milieu granulaire en vue d'élaborer du combustible nucléaire, il n'est pas exploité classiquement de procédés autres que ceux utilisant la voie sèche.

Pour réaliser le mélange des poudres, divers dispositifs sont connus de l'art antérieur, qui peuvent se décomposer selon les familles décrites ci-après.

Tout d'abord, il existe le principe du mélangeur en phase sèche sans média interne. Il peut notamment s'agir d'un mélangeur de type Turbula® de la société WAB qui par des mouvements plus ou moins complexes de la cuve contenant les poudres à mélanger, permet une homogénéisation plus ou moins importante du milieu granulaire. Généralement, l'efficacité de ce type de mélangeur est limitée. En effet, en fonction du type de poudres à mélanger, il peut subsister des zones hétérogènes, pour lesquelles le mélange ne s'opère pas ou du moins d'une manière incorrecte et non admissible. La cinématique de ce type de mélangeur n'est généralement pas assez complexe pour induire un mélange poussé, c'est-à-dire un mélange satisfaisant en termes d'homogénéité, sans mise au point elle-même poussée ou une durée de mélange pénalisante au niveau industriel. Par ailleurs, l'énergie transmise au milieu granulaire dans ce type de mélangeur ne permet pas de réaliser une désagglomération suffisante pour atteindre des degrés d'homogénéité suffisante dans le cas où la taille de ces agglomérats est trop importante (notamment pour être compensée lors de l'étape de frittage).

On connaît également le principe du mélangeur à média. Selon ce principe et afin de favoriser l'opération de mélange, un ou plusieurs mobiles peuvent être utilisés au sein de la cuve contenant la poudre à mélanger. Ces mobiles peuvent être des pales, des turbines, des socs, des rubans, des vis sans fin, entre autres. Pour améliorer le mélange, la cuve peut être elle-même mobile. Ce type de mélangeur peut être plus efficace que la catégorie précédente mais reste encore insuffisant et pâtit de limitations. En effet, le brassage induit une modification du milieu granulaire par agglomération ou une désagglomération difficilement maîtrisable, ce qui induit un foisonnement des poudres et/ou une dégradation de la coulabilité du milieu granulaire. Par ailleurs, l'utilisation de mobiles (média) pour le mélange entraîne des pollutions (contaminations) lorsqu'il s'agit de mélanger des poudres abrasives comme celles devant être mises en oeuvre pour la réalisation de combustible nucléaire. De plus, les mobiles mis en oeuvre induisent des rétentions qui génèrent des débits de doses très impactants dans le cas de l'élaboration de combustible nucléaire.

Il existe également le principe du mélangeur de type broyeur. En effet, en fonction du mode d'utilisation et du type de technologie de certains broyeurs, il est possible de réaliser des mélanges de poudres par cobroyage. Ce type d'opération permet d'obtenir un mélange satisfaisant, d'un point de vue de l'homogénéité, mais nécessite un temps de broyage relativement long, typiquement de plusieurs heures, et induit également des phénomènes de broyage qui font diminuer la taille des particules de poudres. Ceci provoque la génération de fines particules et une modification de la surface spécifique qui a également un impact sur la possibilité d'utiliser ultérieurement les poudres après leur mélange (modification de la coulabilité, de la réactivité (possible oxydation), de la frittabilité des poudres, ...). Dans le cadre de la fabrication de combustible nucléaire, l'opération de cobroyage, en générant des fines particules provoque un impact radiologique non négligeable, du fait de la rétention et de la propension des fines particules à se disperser. Par ailleurs, des phénomènes de colmatage peuvent être induits.

Après l'utilisation de ces différents types de mélangeur, il est souvent nécessaire de réaliser une agglomération ou granulation. De plus, ces dispositifs sont généralement discontinus, ce qui peut être problématique dans des procédés industriels.

D'autres mélangeurs sont également connus, mettant en oeuvre un milieu multiphasique, à savoir des phases fluide-solide. Les mélangeurs du type liquides/solides, par exemple, ne sont pas opérants pour la mise en oeuvre de poudres solubles avec la phase liquide utilisée dans le mélangeur ou bien si les poudres sont modifiées par le contact avec le fluide. Par ailleurs, pour des poudres possédant une forte densité comparativement au liquide introduit dans le mélangeur, le mélange n'est le plus souvent pas efficace ou nécessite des vitesses d'agitation importantes. En effet, la vitesse de décollage d'une particule du fond de l'agitateur est directement liée à l'écart de densité entre les particules constituant les poudres et celle du liquide permettant la mise en suspension.

D'une manière générale, les mélangeurs précités ne sont pas pleinement satisfaisants pour mélanger certaines poudres, comme les poudres d'actinides, et pour permettre une mise en oeuvre industrielle pour, par exemple, le remplissage aisé des moules de presse, pour des opérations de mise en forme. A noter que les mélangeurs de poudres en phase liquide, en particulier de type de ceux décrits dans les demandes de brevet CA 2 882 302 A1, WO 2006/0111266 A1 et WO 1999/010092 A1, ne sont pas adaptés pour la problématique d'un mélange de poudres de type poudres d'actinides, car ils nécessiteraient des vitesses d'agitation trop importantes pour espérer décoller les poudres du fond de la cuve d'agitation et atteindre des niveaux d'homogénéité conformes à ceux recherchés dans l'industrie nucléaire. De plus, encore une fois, ils induiraient des effluents contaminés, difficiles à gérer industriellement mais aussi des risques de criticité, voire de radiolyse de la phase liquide utilisée du fait de la nature des poudres à mettre en oeuvre (au-delà du fait que ces dernières peuvent interagir chimiquement avec le liquide utilisé).

Il est donc généralement nécessaire d'y faire succéder une étape de granulation pour pouvoir obtenir un milieu granulaire coulable.

La granulation peut se faire, de façon classique, selon les méthodes décrites ci-après.

Tout d'abord, par granulation mécanique, les poudres mélangées sont compactées, puis granulées par broyage/concassage. Cette étape génère de fines particules, ce qui est pénalisant d'un point de vue du risque de contamination lorsque les poudres sont des poudres radioactives, telles que des poudres d'actinides.

La granulation peut encore se faire par tamisage ou forçage. Alors, les poudres sont contraintes à passer au travers d'un tamis dont les mailles sont choisies afin de piloter la taille des agglomérats.

La granulation peut enfin se faire par atomisation. Dans ce cas, les poudres sont mises en suspension dans une phase liquide de type solution aqueuse additivée, par exemple. Ces additifs, généralement des composés organiques, comme mentionné dans la demande de brevet EP 1 137 597 A1, peuvent permettre de piloter la viscosité et la tension de surface des suspensions pour permettre une maîtrise de l'atomisation. L'usage de composés organiques est cependant susceptible de générer une pollution des poudres à atomiser. Par ailleurs, l'usage de liquide pour l'atomisation nécessite une étape de séchage dont le réglage n'est pas trivial et nécessite au minimum la présence d'éléments chauffants pour procéder au séchage, comme imposé par exemple dans la demande de brevet EP 1 137 597 A1.

En outre, lorsqu'il s'agit de procéder aux opérations de mélange des poudres, puis de granulation, plusieurs difficultés apparaissent. Ainsi, il peut y avoir un risque de détérioration du mélange obtenu lors du transfert des poudres d'une étape à l'autre, à savoir de l'étape de mélange vers l'étape de granulation. De plus, il peut exister une difficulté quant au transfert des poudres après mélange, le mélange induisant très souvent un foisonnement des poudres impactant négativement leur coulabilité. Enfin, cela peut générer de fines particules, pénalisantes pour la mise en oeuvre de poudres radioactives, telles que les poudres d'actinides.

Par ailleurs, US 3,321,560 A décrit un procédé de production de combustible pour un réacteur nucléaire, et US 2014/0000297 A1 décrit un procédé de production de particules avec l'usage de fluides cryogéniques.

## EXPOSÉ DE L'INVENTION

Il existe ainsi un besoin pour proposer un nouveau type de dispositif de granulation de poudres pour la préparation de milieux granulaires, et notamment pour la granulation de poudres d'actinides.

En particulier, il existe un besoin pour pouvoir concomitamment :

- désagglomérer les poudres à mélanger sans nécessairement en modifier leur surface spécifique et générer de fines particules,

- mélanger les poudres avec un niveau d'homogénéité suffisant pour obtenir un mélange de poudres répondant aux spécifications, notamment en termes d'homogénéité (i.e. permettant notamment d'obtenir un volume élémentaire représentatif (VER) au sein du milieu granulaire de l'ordre de quelques micromètres cubes à environ 10 $\mu m^3$),

- ne pas induire de pollution des poudres à mélanger, ni de modification de la chimie de surface, ni générer d'effluents liquides difficiles à traiter,
- ne pas induire de risque de criticité spécifique,
- ne pas induire de risque de radiolyse spécifique,
- ne pas induire d'échauffement des poudres à mélanger,

- s'appuyer sur un mélangeur à diamètre limité pour maîtriser le risque de criticité même en cas d'erreur de chargement du mélangeur,
- réaliser l'opération de mélange en limitant autant que possible l'énergie dépensée et ce en un temps relativement court par rapport aux autres mélangeurs, soit de l'ordre de quelques minutes comparativement à quelques heures (pour d'autres systèmes de mélange comme les broyeurs à boulets), pour une même quantité de matière à mélanger,
- disposer d'un procédé de mélange continu ou quasiment continu.

L'invention a pour but de remédier au moins partiellement aux besoins mentionnés précédemment et aux inconvénients relatifs aux réalisations de l'art antérieur.

L'invention a pour objet, selon l'un de ses aspects, un dispositif de granulation de poudres, notamment de poudres d'actinides, par atomisation cryogénique, caractérisé en ce qu'il comporte :

- un dispositif de mélange de poudres par fluide cryogénique, comportant au moins une enceinte de mélange des poudres, comportant un fluide cryogénique,
- un dispositif d'atomisation d'une suspension de poudres mélangées par le dispositif de mélange de poudres pour permettre une granulation des poudres, comportant :

  - des moyens de fractionnement de la suspension de poudres permettant le réglage de la dimension des gouttelettes de suspension de poudres à atomiser,
  - des moyens de réglage de l'humidité des poudres mélangées et/ou de l'humidité de l'atmosphère d'atomisation.

Il est à noter que, de façon habituelle, un fluide cryogénique désigne un gaz liquéfié conservé à l'état liquide à basse température.

Grâce à l'invention, il est possible de coupler une opération de mélange des poudres en phase de gaz liquéfié avec une atomisation de la suspension de poudres mélangées. Le mélange utilisant un fluide cryogénique (gaz liquéfié), la séparation du liquide constitutif de la suspension de poudres elle-même peut ainsi ne pas reposer sur un séchage mais sur une remise en température ambiante de la suspension, ce qui facilite grandement l'opération de séparation du liquide constitutif de la suspension des poudres ainsi granulées.

Le dispositif de granulation de poudres selon l'invention peut en outre comporter l'une ou plusieurs des caractéristiques suivantes prises isolément ou suivant toutes combinaisons techniques possibles.

Le fluide cryogénique peut comporter un liquide faiblement hydrogéné, soit un liquide comportant au plus un atome d'hydrogène par molécule de liquide, présentant une température d'ébullition inférieure à celle de l'eau.

Les moyens de fractionnement de la suspension de poudres peuvent être configurés pour permettre le réglage du diamètre des gouttelettes de suspension de poudres à atomiser, de sorte que le diamètre des gouttelettes de suspension de poudres soit défini selon la relation suivante :

$$\frac{d_o}{D} = G\left\{\frac{fD}{v}, \frac{1}{We}, \frac{1}{\mathrm{Re}}, \frac{A}{D}\right\}$$

avec $We = \rho v^2 \cdot (d_o)/\sigma$ et $\mathrm{Re} = \rho d_o v/\mu$,
où :

f représente la fréquence de vibration du dispositif d'atomisation,
v représente la vitesse de la suspension de poudres,
ρ représente la masse volumique de la suspension de poudres à fractionner,
μ représente la viscosité de la suspension de poudres à fractionner,
σ représente la tension de surface de la suspension de poudres à fractionner,
A représente l'amplitude d'oscillation d'une buse d'atomisation du dispositif d'atomisation,
do représente le diamètre des gouttelettes, et
D représente le diamètre d'une buse d'atomisation du dispositif d'atomisation.

De façon avantageuse, les moyens de fractionnement de la suspension de poudres peuvent être mis en oeuvre par le biais d'au moins une buse d'atomisation du dispositif d'atomisation, notamment une buse vibrante, par exemple de fréquence de vibration comprise entre 100 Hz et 10 000 Hz, ou piézoélectrique, pour laquelle en particulier il peut être possible de régler la fréquence f et aussi l'amplitude A afin de pouvoir régler aisément la granulométrie des gouttelettes de suspension de poudres selon la relation donnée ci-dessus.

Par ailleurs, les moyens de fractionnement de la suspension de poudres peuvent être configurés pour permettre le réglage du diamètre des gouttelettes de suspension de poudres à atomiser par modulation selon un facteur de réduction R de diamètre entre le diamètre des gouttelettes de suspension de poudres à atomiser et le diamètre des granulés, ou agglomérats, obtenus après atomisation de la suspension de poudres mélangées et évaporation du fluide cryogénique, de sorte que :

$$\frac{d_0}{d_s} = R = \sqrt[3]{\frac{[U]_f}{[U]_i}}$$

où :

d₀ représente le diamètre des gouttelettes,

$d_0$ représente le diamètre des gouttelettes,

$d_s$ représente le diamètre des granulés,

$[U]_f$ représente le taux d'occupation volumique des poudres dans l'agglomérat de granulés formé après granulation, et

$[U]_i$ représente la concentration en poudres de la suspension de poudres à atomiser.

Les moyens de réglage de l'humidité des poudres mélangées et/ou de l'humidité de l'atmosphère d'atomisation peuvent comporter des moyens d'étuvage des poudres. Ces moyens d'étuvage des poudres peuvent permettre le réglage de l'humidité, en particulier avant atomisation, par un étuvage plus ou moins poussé des poudres.

Les moyens de réglage de l'humidité des poudres mélangées et/ou de l'humidité de l'atmosphère d'atomisation peuvent encore comporter un générateur d'humidité et un déshumidificateur. Le réglage de l'humidité peut ainsi être réalisé par le biais de ce générateur d'humidité associé au déshumidificateur, permettant l'obtention d'une large gamme de teneurs en eau, pour assurer une atmosphère d'atomisation plus ou moins humide.

En outre, le dispositif de mélange peut encore comporter :

- une enceinte d'alimentation en poudres pour permettre l'introduction des poudres dans l'enceinte de mélange,
- des moyens d'agitation dans l'enceinte de mélange pour permettre le mélange des poudres mises en suspension dans le fluide cryogénique.

Selon un mode de réalisation, le dispositif de mélange peut comporter des moyens de mélange de l'enceinte de mélange selon un mouvement gyroscopique.

En particulier, les moyens de mélange selon un mouvement gyroscopique peuvent permettre la rotation de l'enceinte de mélange selon les trois axes de la métrologie tridimensionnelle. Ce type d'agitation par mouvement gyroscopique peut notamment permettre de favoriser le mélange des poudres lorsqu'elles présentent de fortes densités comparativement à la densité de la phase fluidique du fluide cryogénique situé dans l'enceinte de mélange.

Selon un autre mode de réalisation, le dispositif de mélange peut comporter :

- une pluralité d'enceintes de mélange des poudres, disposées successivement en série les unes après les autres, l'enceinte d'alimentation en poudres permettant l'introduction des poudres dans au moins la première enceinte de mélange,
- une pluralité de systèmes de restriction de passage des poudres, chaque système de restriction de passage étant situé entre deux enceintes de mélange successives, pour contraindre la distribution de poudres d'une enceinte de mélange à la suivante.

Chaque enceinte de mélange peut alors comporter un fluide cryogénique et des moyens d'agitation pour permettre le mélange des poudres mises en suspension dans le fluide cryogénique.

Par ailleurs, les moyens d'agitation peuvent comporter des mobiles de mélange, notamment des pales, des turbines et/ou des mobiles à effet couette, entre autres.

Ces mobiles de mélange peuvent comporter des mobiles de broyage.

De plus, les moyens d'agitation peuvent aussi comporter des moyens de génération de vibrations, notamment de vibrations ultrasoniques, notamment des sonotrodes.

En outre, les systèmes de restriction de passage peuvent comporter des tamis. Les systèmes de restriction de passage peuvent encore comporter des diaphragmes.

Les systèmes de restriction de passage peuvent être réglables et configurés pour que leur section de passage soit décroissante en fonction du flux d'écoulement des poudres au travers de la pluralité d'enceinte de mélange, la section de passage d'un (n-1)ième système de restriction de passage étant ainsi supérieure à la section de passage d'un nième système de restriction de passage en suivant le flux d'écoulement des poudres.

De plus, la section de passage du premier système de restriction de passage peut être inférieure à la section naturelle d'écoulement des poudres de manière à générer une restriction de passage dès le premier système de restriction de passage.

Par ailleurs, la pluralité d'enceintes de mélange et la pluralité de systèmes de restriction de passage des poudres peuvent avantageusement être disposées selon une même direction verticale de manière à permettre un écoulement des poudres sous l'effet de la gravité.

Le dispositif de mélange peut comporter au moins deux enceintes d'alimentation en poudres, et notamment autant d'enceintes d'alimentation en poudres que de types de poudres à mélanger.

La ou les enceintes d'alimentation peuvent comporter des trémies à alimentation réglable et/ou des systèmes de type doseurs, notamment des plateaux ou couloirs vibrants.

Le dispositif de mélange peut encore comporter :

- une enceinte de mélange des poudres, comportant un fluide cryogénique, pourvue de moyens pour former un lit de poudres fluidisé,
- une enceinte d'alimentation en poudres pour permettre l'introduction des poudres dans l'enceinte de mélange,

- une enceinte d'alimentation en fluide cryogénique pour permettre l'introduction du fluide cryogénique dans l'enceinte de mélange,
- un système de génération de vibrations dans le lit de poudres fluidisé,
- un système de pilotage du système de génération de vibrations.

Le dispositif de mélange peut également comporter un système d'analyse de concentration de la suspension de poudres et de fluide cryogénique dans l'enceinte de mélange, dont le fonctionnement est notamment piloté par le système de pilotage.

L'enceinte de mélange peut être configurée de telle sorte que l'introduction de fluide cryogénique dans celle-ci permette une mise en fluidisation des poudres à mélanger par percolation du fluide cryogénique au travers du lit de poudres ainsi fluidisé.

L'enceinte de mélange peut comporter un système de distribution, notamment une grille ou une pièce frittée, du fluide cryogénique au travers du lit fluidisé de poudres pour permettre une répartition homogène du fluide cryogénique dans le lit fluidisé.

Le système de génération de vibrations peut être au moins partiellement situé dans le lit fluidisé de poudres. En particulier, le système de génération de vibrations peut comporter des sonotrodes introduites dans le lit fluidisé de poudres.

Les sonotrodes peuvent être pilotées de manière indépendante par le système de pilotage pour induire un déphasage périodique des phases entre les sonotrodes afin d'introduire des interférences instationnaires améliorant le mélange au sein du lit fluidisé de poudres.

Les sonotrodes peuvent être configurées pour générer des oscillations pseudo-chaotiques de type de Van der Pol.

Le dispositif de mélange peut en outre comporter des moyens d'agitation dans l'enceinte de mélange pour permettre le mélange des poudres mises en suspension dans le fluide cryogénique, comportant notamment des moyens de broyage, par exemple de type boulets, galets, entre autres.

De plus, le dispositif comporte préférentiellement un système de charge électrostatique des poudres destinées à être introduites dans la ou les enceintes de mélange.

Une partie des poudres peut notamment être mise en contact avec une partie du système de charge électrostatique pour être chargée électrostatiquement de manière positive et l'autre partie des poudres peut être mise en contact avec l'autre partie du système de charge électrostatique pour être chargée électrostatiquement de manière négative, afin de permettre une agglomération locale différenciée. En cas de mélange de plus de deux types de poudres, certaines poudres peuvent être soit chargées positivement, soit chargées négativement, soit sans charge.

Le fluide cryogénique peut par ailleurs être de tout type, étant notamment de l'azote liquéfié ou de l'argon. Il est à noter que l'emploi de l'azote est pertinent du fait de son faible prix mais aussi du fait que les boîtes à gants et les procédés mis en oeuvre pour l'élaboration du combustible nucléaire à base de plutonium sont inertés à l'azote et que l'azote liquide est lui-même mis en oeuvre dans certaines opérations sur le combustible (mesure BET,...). L'usage de ce type de fluide cryogénique n'induit donc pas de risque particulier supplémentaire dans le procédé d'élaboration.

En outre, l'invention a encore pour objet, selon un autre de ses aspects, un procédé de granulation de poudres, notamment de poudres d'actinides, par atomisation cryogénique, caractérisé en ce qu'il est mis en oeuvre au moyen d'un dispositif tel que défini précédemment, et en ce qu'il comporte les étapes suivantes :

a) introduction de poudres et de fluide cryogénique dans au moins une enceinte de mélange du dispositif de mélange de poudres par fluide cryogénique pour obtenir une suspension de poudres et de fluide cryogénique,

b) atomisation de la suspension de poudres et de fluide cryogénique par le biais du dispositif d'atomisation pour permettre une granulation des poudres,

c) obtention de granulés formés à partir des poudres.

L'obtention de granulés selon l'étape c) peut être réalisée par la sublimation du fluide cryogénique. De la sorte, il peut être possible d'obtenir des granulés sphéroïdiques permettant de former un milieu granulaire coulable.

Au cours de la première étape a), les poudres peuvent avantageusement être chargées électrostatiquement de manière différente, notamment de manière opposée en présence d'au moins deux types de poudres, pour favoriser l'agglomération locale différentiée.

Le dispositif et le procédé de granulation de poudres selon l'invention peuvent comporter l'une quelconque des caractéristiques énoncées dans la description, prises isolément ou selon toutes combinaisons techniquement possibles avec d'autres caractéristiques.

**BRÈVE DESCRIPTION DES DESSINS**

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :

- la figure 1 représente un schéma illustrant le principe général d'un dispositif de granulation de poudres par atomisation cryogénique conforme à l'invention,
- la figure 2 illustre schématiquement les phases subies par la suspension de poudres atomisées pour l'obtention de granulés de poudres,

- la figure 3 représente un schéma illustrant le principe général d'un exemple de dispositif de mélange de poudres d'un dispositif de granulation de poudres par atomisation cryogénique conforme à l'invention,
- la figure 4 représente schématiquement l'agglomération de particules de poudres chargées de manière opposée préalablement à leur introduction dans des enceintes de mélange d'un dispositif de mélange de poudres conforme au principe de la figure 3,
- les figures 5 et 6 représentent respectivement deux exemples de dispositifs de mélange conformes au principe général de la figure 3 pour un dispositif de granulation conforme à l'invention,
- les figures 7A, 7B et 7C représentent schématiquement des variantes de réalisation des mobiles de mélange des dispositifs de mélange des figures 5 et 6,
- la figure 8 représente un schéma illustrant un autre exemple de dispositif de mélange de poudres d'un dispositif de granulation de poudres par atomisation cryogénique conforme à l'invention,
- la figure 9 représente un schéma illustrant le principe général d'un autre dispositif de mélange de poudres par fluide cryogénique pour un dispositif de granulation de poudres par atomisation cryogénique conforme à l'invention,
- la figure 10 représente partiellement un autre exemple de dispositif de mélange pour un dispositif de granulation de poudres par atomisation cryogénique conforme à l'invention,
- la figure 11 illustre une représentation de lignes d'interférences induites par deux sources vibratoires ayant la même fréquence de pulsation, et
- les figures 12A et 12B illustrent la génération d'oscillations stables après convergence, et les figures 13A et 13B illustrent la génération d'oscillations quasi chaotiques d'un oscillateur de type Van der Pol.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

Il est noté que dans les exemples de réalisation décrits ci-après, les poudres P considérées sont des poudres d'actinides permettant la fabrication de pastilles de combustible nucléaire. De plus, le fluide cryogénique considéré est ici de l'azote liquéfié. Toutefois, l'invention n'est pas limitée à ces choix.

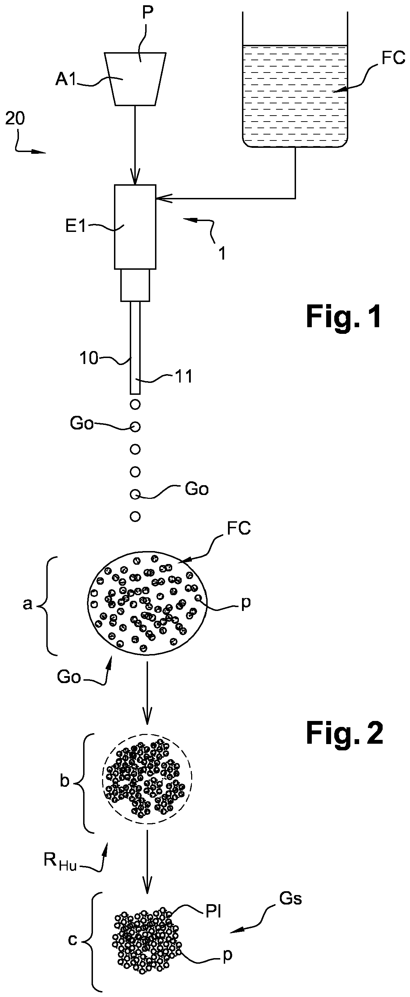

En référence à la figure 1, on a représenté un schéma illustrant le principe général d'un dispositif 20 de granulation de poudres P par atomisation cryogénique conforme à l'invention.

Selon ce principe, le dispositif 20 de granulation de poudres P par atomisation cryogénique comporte un dispositif 1 de mélange de poudres P par fluide cryogénique FC et un dispositif 10 d'atomisation d'une suspension de poudres P mélangées par le dispositif 1 de mélange de poudres P pour permettre une granulation des poudres P.

Le dispositif 1 de mélange de poudres P comporte une enceinte de mélange E1 des poudres P, dans laquelle sont introduits le fluide cryogénique FC et les poudres P provenant d'un dispositif d'alimentation A1.

Le dispositif 10 d'atomisation est couplé au dispositif 1 de mélange des poudres P, et comporte une buse d'atomisation 11 de gouttelettes Go de poudres P. De façon avantageuse, le dispositif 10 d'atomisation comporte une sonotrode.

De façon avantageuse, le dispositif 10 d'atomisation de la suspension de poudres P mélangées par le dispositif 1 de mélange de poudres P comporte des moyens de fractionnement de la suspension de poudres P permettant le réglage de la dimension des gouttelettes Go de poudres P à atomiser. De plus, ce dispositif 10 comporte également des moyens de réglage de l'humidité des poudres P mélangées et/ou de l'humidité de l'atmosphère d'atomisation.

Le réglage de l'humidité des poudres P à mélanger et à atomiser, ou bien encore le réglage de l'humidité de l'atmosphère au sein de laquelle s'effectue l'atomisation des poudres, peuvent permettre de régler la cohésion des agglomérats, ou granulés Gs, résultant de l'atomisation, par la création de ponts liquides entre agrégats Gs, comme décrit plus loin en référence à la figure 2.

Le pilotage de la taille des gouttelettes Go de la suspension de poudres P mélangées peut être réalisé au travers de diverses relations telles que décrites ci-après.

En effet, les moyens de fractionnement de la suspension de poudres P sont avantageusement configurés pour permettre le réglage du diamètre $d_0$ des gouttelettes Go de poudres P à atomiser, de sorte que le diamètre $d_0$ des gouttelettes Go de poudres P soit défini selon la relation suivante :

$$\frac{d_o}{D} = G\left\{\frac{fD}{v}, \frac{1}{We}, \frac{1}{Re}, \frac{A}{D}\right\}$$

avec $We = \rho v^2 \cdot (d_o)/\sigma$ et $Re = \rho d_o v/\mu$,
où :

    f représente la fréquence de vibration du dispositif 10 d'atomisation,
    v représente la vitesse de la suspension de poudres P,
    $\rho$ représente la masse volumique de la suspension de poudres P à fractionner,

µ représente la viscosité de la suspension de poudres P à fractionner,

σ représente la tension de surface de la suspension de poudres P à fractionner,

A représente l'amplitude d'oscillation de la buse d'atomisation 11 du dispositif 10 d'atomisation,

do représente le diamètre des gouttelettes Go, et

D représente le diamètre de la buse d'atomisation 11 du dispositif 10 d'atomisation.

Par ailleurs, la teneur en poudres dans la suspension de poudres P mélangées à atomiser peut avantageusement être modulée pour maîtriser le facteur de réduction R de diamètre entre le diamètre do des gouttelettes Go de poudres P à atomiser et le diamètre $d_s$ des granulés Gs, ou agglomérats, obtenus après atomisation de la suspension de poudres P mélangées et évaporation du fluide cryogénique FG.

Ainsi, le facteur de réduction R peut être approché par la formule suivante :

$$\frac{d_0}{d_s} = R = \sqrt[3]{\frac{[U]_f}{[U]_i}}$$

où :

do représente le diamètre des gouttelettes Go,

$d_s$ représente le diamètre des granulés Gs,

$[U]_f$ représente le taux d'occupation volumique des poudres P dans l'agglomérat de granulés Gs formé après granulation, et

$[U]_i$ représente la concentration en poudres P de la suspension de poudres P à atomiser.

Au-delà de piloter le diamètre do des gouttelettes Go de la suspension de poudres P par le biais de l'un ou plusieurs des paramètres précités, le réglage de l'humidité des poudres P permet de procurer une cohésion accrue des granulés Gs, ou agglomérats. Ce réglage d'humidité peut se faire lors de l'introduction des poudres P dans l'enceinte de mélange E1 avec le gaz liquéfié FG, ou bien encore lors de l'évaporation du gaz liquéfié FG au sortir de la buse d'atomisation 11, comme l'illustre la figure 2 décrite ci-après.

Ainsi, en référence à la figure 2, on a illustré schématiquement les phases subies par la suspension de poudres P atomisées pour l'obtention de granulés Gs de poudres.

Dans la phase a, on trouve les gouttelettes Go de poudres P résultant de l'atomisation de la suspension de poudres P. Ces gouttelettes Go comporte le gaz liquéfié FG et les poudres P.

Au cours de la phase b, le gaz liquéfié FG s'évapore. Le réglage du taux d'humidité $R_{Hu}$ peut s'effectuer à ce niveau, comme illustré.

Alors, dans la phase c, on obtient l'agglomération des poudres P pour obtenir des granulés Gs sphériques formés de particules de poudres P entre lesquelles se trouvent des ponts liquides de gaz liquéfié FG non évaporé.

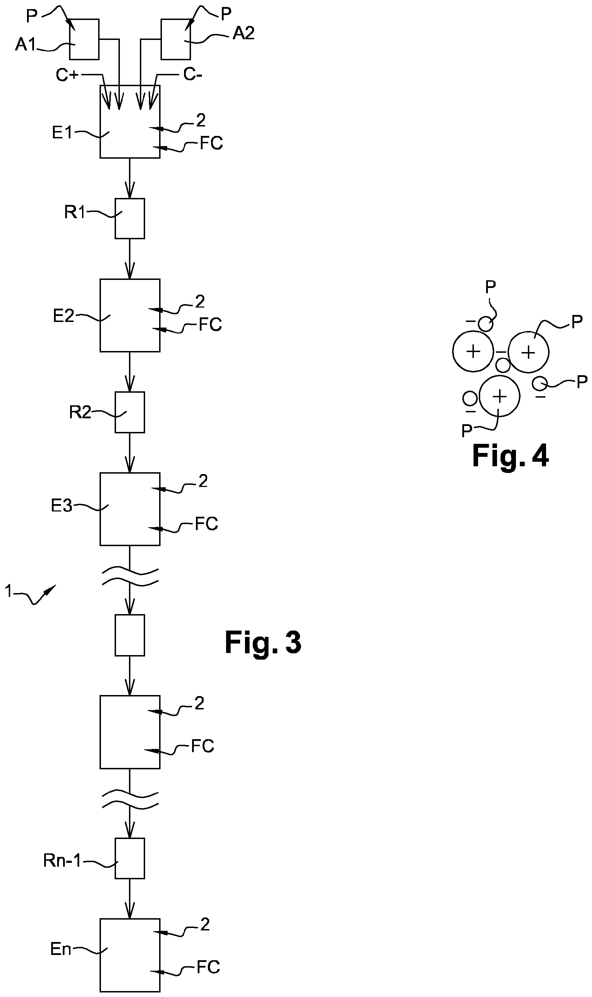

En référence maintenant à la figure 3, on a représenté un schéma illustrant le principe général d'un exemple de dispositif 1 de mélange de poudres P par fluide cryogénique pour un dispositif 20 de granulation de poudres P par atomisation cryogénique conforme à l'invention, tel que par exemple décrit précédemment en référence à la figure 1.

Selon ce principe, le dispositif de mélange 1 comporte un nombre n d'enceintes de mélange E1, ..., En des poudres P, disposées successivement en série les unes après les autres selon une même direction verticale de sorte que les poudres puissent circuler au travers des enceintes de mélange E1, ..., En sous l'effet de la force de gravité.

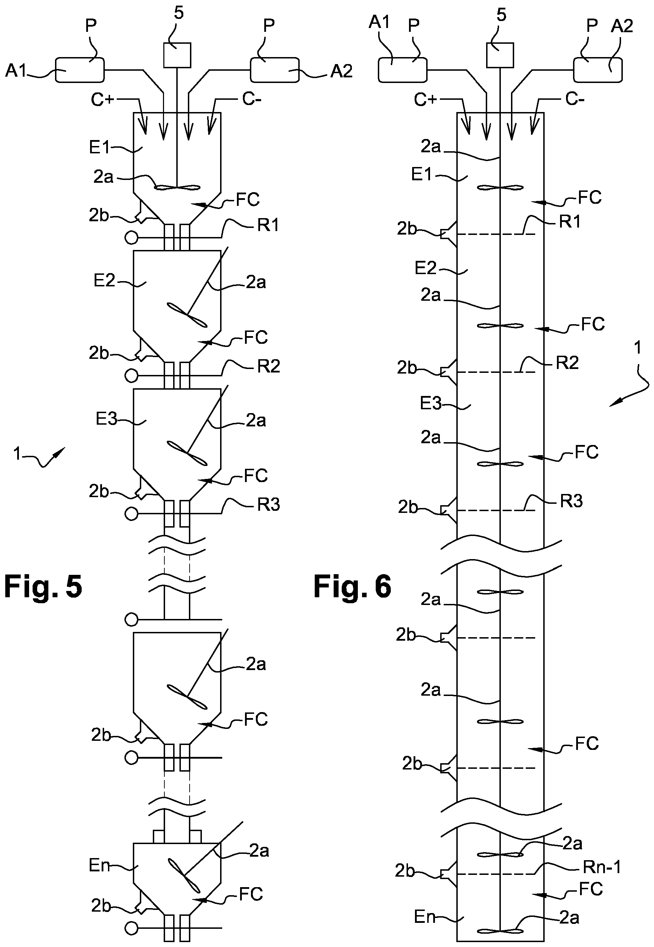

Par ailleurs, le dispositif 1 comporte un nombre n-1 de systèmes de restriction de passage R1, ..., Rn-1 des poudres P, chaque système de restriction de passage R1, ..., Rn-1 étant situé entre deux enceintes de mélange E1, ..., En successives, pour contraindre la distribution de poudres P d'une enceinte de mélange E1, ..., En à la suivante. Des exemples de tels systèmes de restriction de passage R1, ..., Rn-1 sont présentés par la suite en référence notamment aux figures 5 et 6.

En outre, les systèmes de restriction de passage peuvent comporter des tamis. Les systèmes de restriction de passage peuvent encore comporter des diaphragmes.

Les systèmes de restriction de passage peuvent être réglables et configurés pour que leur section de passage soit décroissante en fonction du flux d'écoulement des poudres au travers de la pluralité d'enceinte de mélange, la section de passage d'un (n-1)ième système de restriction de passage étant ainsi supérieure à la section de passage d'un nième système de restriction de passage en suivant le flux d'écoulement des poudres.

De plus, la section de passage des systèmes de restriction de passage peut être inférieure à la section naturelle d'écoulement des poudres de manière à ce que ces poudres soit nécessairement désagglomérées lorsqu'elles passent d'une enceinte de mélange à l'autre. Ainsi, le temps de séjour des particules à mélanger est intrinsèquement suffisant pour permettre la désagglomération.

De plus, le dispositif 1 comporte également deux enceintes d'alimentation A1 et A2 en poudres P, prévues notamment pour distribuer des poudres de types différents.

Les deux enceintes d'alimentation A1 et A2 en poudres P permettre l'introduction des poudres P dans la première enceinte de mélange E1 au contact du fluide cryogénique FC de la première enceinte E1. Puis, les poudres P traversent successivement les systèmes de restriction de passage R1, ..., Rn-1 et les enceintes de mélange E2, ..., En, chaque enceinte de mélange comportant un fluide cryogénique FC.

De plus, chaque enceinte de mélange E1, ..., En comporte des moyens d'agitation 2 permettant le mélange des poudres P mises en suspension dans le fluide cryogénique FC. Des exemples de tels moyens d'agitation 2 sont donnés par la suite en référence notamment aux figures 5 et 6.

Les deux enceintes d'alimentation A1 et A2 comportent par exemple des trémies à alimentation réglable, utilisant par exemple une vis sans fin, et/ou des systèmes de type doseurs, notamment des plateaux ou couloirs vibrants.

En outre, de façon avantageuse, le dispositif 1 comporte encore un système de charge électrostatique C+, C- des poudres P introduites dans les enceintes de mélange E1, ..., En.

En particulier, la partie des poudres P contenues dans la première enceinte d'alimentation A1 est mise en contact avec la partie positive C+ du système de charge électrostatique pour être chargée électrostatiquement de manière positive, tandis que la partie des poudres P contenues dans la deuxième enceinte d'alimentation A2 est mise en contact avec la partie négative C- du système de charge électrostatique pour être chargée électrostatiquement de manière négative.

De cette façon, il est possible de permettre une agglomération locale différenciée, autrement dit d'éviter l'auto-agglomération. Comme l'illustre la figure 4, qui représente schématiquement l'agglomération des particules de poudres P chargées de manière opposée préalablement à leur introduction dans les enceintes de mélange E1, ..., En, les particules des deux poudres P à mélanger étant de charge électrostatique opposée, une éventuelle réagglomération s'opérera majoritairement par intercalage de poudres de nature, et donc de charge, différentes. Ceci permet ainsi de favoriser le mélange à l'échelle des particules constitutives des poudres P à mélanger.

L'invention exploite ainsi différents effets techniques permettant notamment d'atteindre le niveau d'homogénéisation souhaité, tels que ceux décrits ci-après :

- la désagglomération, au moins partielle, améliorée des poudres P lorsque celles-ci sont mises en suspension dans le liquide cryogénique FC,
- l'amélioration de la mouillabilité des poudres P en utilisant le gaz liquéfié constitué par le fluide cryogénique FC, qui est un liquide à faible tension de surface, comparativement à l'eau, celui-ci étant avantageusement employé sans utilisation d'additif difficile à éliminer,
- l'agitation proche du régime d'un réacteur parfaitement agité mise en oeuvre par le mouvement des moyens d'agitation, pouvant ou non utiliser la mise en vibration de la suspension comme décrit par la suite, ces vibrations étant alors avantageusement instationnaires pour limiter les zones d'hétérogénéités.

En référence maintenant aux figures 5 et 6, on a représenté schématiquement deux exemples de dispositifs 1 de mélange pour un dispositif 20 de granulation de poudres P par atomisation cryogénique conforme à l'invention, dont les principes ont été décrits précédemment en référence à la figure 3.

Dans chacun de ces deux exemples, le dispositif de mélange 1 comporte, en plus des éléments décrits précédemment en référence à la figure 3, un moteur d'agitation 5 capable d'entraîner en rotation des premiers moyens d'agitation 2a se présentant sous la forme de mobiles de mélange 2a dans les enceintes de mélange E1, ..., En.

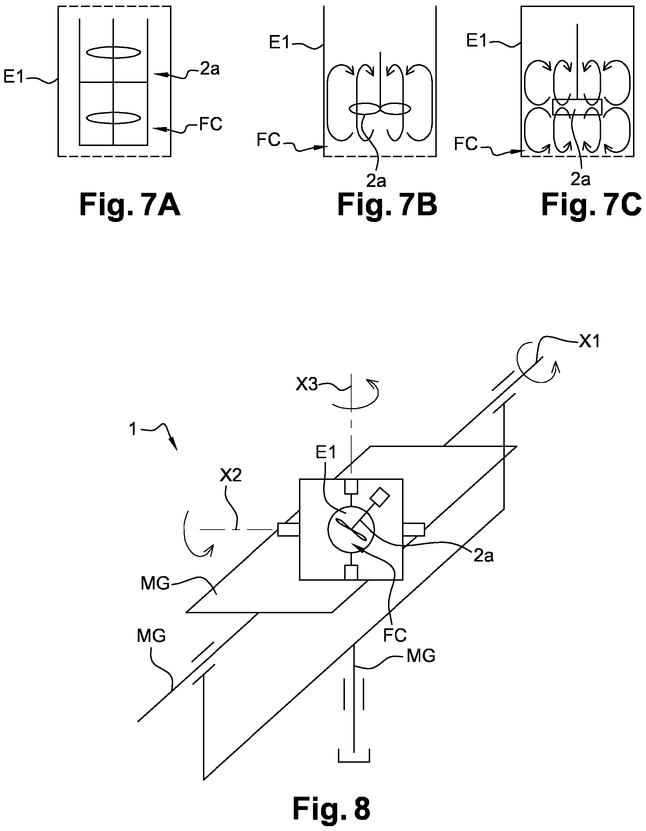

Ces mobiles de mélange 2a peuvent comporter des mobiles de broyage. Ces mobiles de mélange 2a peuvent encore comporter des pales, des mobiles à effet couette, des turbines et/ou des pales, ces types de mobiles étant respectivement représentés sur les figures 7A, 7B et 7C. Dans les exemples de réalisation des figures 5 et 6, les mobiles de mélange 2a comportent des turbines.

Par ailleurs, dans chacun de ces deux exemples, le dispositif 1 comporte encore des deuxièmes moyens d'agitation 2b sous la forme de moyens de génération de vibrations ultrasoniques comprenant des sonotrodes 2b.

De plus, les deux exemples de réalisation représentés sur les figures 5 et 6 se différencient par la nature des systèmes de restriction de passage R1, ..., Rn-1 utilisés.

Ainsi, dans l'exemple de réalisation de la figure 5, les systèmes de restriction de passage R1, ..., Rn-1 comportent des diaphragmes.

Dans l'exemple de réalisation de la figure 6, les systèmes de restriction de passage R1, ..., Rn-1 comportent des tamis, plus précisément des mailles de tamis.

Dans ces deux exemples, les systèmes de restriction de passage R1, ..., Rn-1 sont à section de passage réglable et ainsi disposés de telle sorte que leurs sections de passage soient classées de la plus grande à la plus fine dans le sens descendant du flux de poudres P. Avantageusement également, les sections de passage de ces systèmes de restrictions de passage R1, ..., Rn-1 sont inférieures à la section d'écoulement naturel des poudres P afin de forcer la désagglomération avant le passage au travers de ces sections.

On a en outre représenté, en référence à la figure 8, un schéma illustrant un autre exemple de dispositif 1 de mélange de poudres P pour un dispositif 20 de granulation de poudres P par atomisation cryogénique conforme à l'invention.

Dans cet exemple, le dispositif 1 comporte une unique enceinte de mélange E1 et des moyens de mélange MG de cette enceinte de mélange E1 selon un mouvement gyroscopique.

Plus précisément, ces moyens de mélange MG selon un mouvement gyroscopique permettent la rotation de l'enceinte de mélange E1 selon les trois axes X1, X2 et X3 de la métrologie tridimensionnelle. Ce type d'agitation par mouvement gyroscopique favorise le mélange des poudres P lorsqu'elles présentent de fortes densités comparativement à la densité de la phase fluidique du fluide cryogénique FC situé dans l'enceinte de mélange E1.

De plus, l'enceinte de mélange E1 comporte des moyens d'agitation 2a, par exemple sous la forme de de turbines.

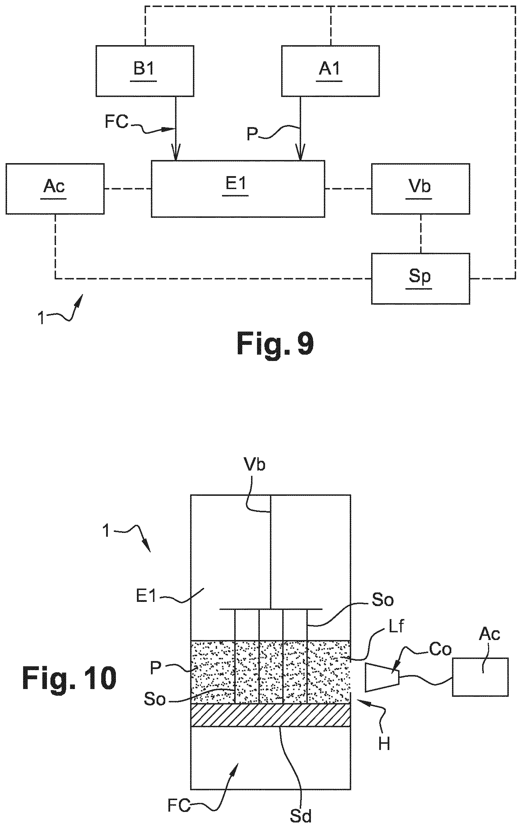

En référence maintenant à la figure 9, on a représenté un schéma illustrant le principe général d'un autre exemple de dispositif 1 de mélange de poudres P par fluide cryogénique pour un dispositif de granulation 20 conforme à l'invention.

Selon ce principe, le dispositif de mélange 1 comporte une enceinte de mélange E1, calorifugée, des poudres P pourvue de moyens pour former un lit de poudres fluidisé Lf, visible sur la figure 10 décrite par la suite.

De plus, le dispositif de mélange 1 comporte une enceinte d'alimentation A1 en poudres P pour permettre l'introduction des poudres P dans l'enceinte de mélange E1, et une enceinte d'alimentation B1 en fluide cryogénique FC pour permettre l'introduction du fluide cryogénique FC dans l'enceinte de mélange E1. De cette façon, il est possible d'obtenir une suspension de poudres P et du fluide cryogénique FC dans l'enceinte de mélange E1 formant un lit fluidisé Lf.

L'enceinte d'alimentation B1 en fluide cryogénique FC peut correspondre à une enceinte de distribution ou une enceinte de recirculation de fluide cryogénique FC. Cette enceinte d'alimentation B1 peut permettre la distribution et/ou le recyclage de fluide cryogénique FC. Elle peut en particulier pour partie s'appuyer sur une mise en pression d'un réservoir d'alimentation en gaz liquéfié.

Par ailleurs, de façon avantageuse, le dispositif de mélange 1 comporte également un système de génération de vibrations Vb dans le lit de poudres fluidisé Lf, un système de pilotage Sp de ce système de génération de vibrations Vb, et un système d'analyse de concentration Ac de la suspension de poudres P et de fluide cryogénique FC dans l'enceinte de mélange E1, dont le fonctionnement est piloté par le système de pilotage Sp.

Le système de pilotage Sp peut notamment permettre le pilotage du fonctionnement du dispositif 1 et le traitement de données, notamment en termes de conditions d'alimentation en poudres P, en fluide cryogénique FC et/ou en termes d'amplitude des vibrations.

De façon avantageuse, comme il apparaîtra plus clairement en référence à la figure 10, l'enceinte de mélange E1 est configurée de telle sorte que l'introduction de fluide cryogénique FC dans celle-ci permette une mise en fluidisation des poudres P à mélanger par percolation du fluide cryogénique FC au travers du lit de poudres ainsi fluidisé Lf.

En référence à la figure 10 justement, on a représenté partiellement et schématiquement un exemple de dispositif de mélange 1 pour un dispositif de granulation 20 conforme à l'invention.

Ce dispositif de mélange 1 comporte une enceinte de mélange E1 formant un réservoir d'axe principal vertical ayant une symétrie de révolution, notamment sous la forme d'un cylindre, et étant avantageusement calorifugé pour minimiser les pertes thermiques comme sa vocation est de recevoir une phase de gaz liquéfié circulante.

De façon avantageuse, le fluide cryogénique FC (gaz liquéfié) est introduit dans la partie basse de l'enceinte de mélange E1, en entrée du lit fluidisé Lf de poudres P, par le biais d'un système de distribution Sd, notamment sous forme de grille ou de pièce frittée, permettant de répartir le fluide cryogénique FC de manière homogène sur la section de passage du lit fluidisé Lf.

Par ailleurs, l'enceinte de mélange E1 peut être équipée d'une zone divergente afin de désengager les particules de poudres P les plus petites et leur permettre de rester dans la zone du lit fluidisé Lf.

En outre, un système d'analyse de concentration Ac de la suspension de poudres P et de fluide cryogénique FC dans l'enceinte de mélange E1 est également prévu, ce système Ac comportant notamment un capteur optique Co permettant d'observer le lit fluidisé Lf de poudres P au travers d'un hublot de vision H. Le système Ac est ainsi interfacé au travers du lit fluidisé Lf.

Le système d'analyse de concentration Ac, équipé du capteur optique Co, peut permettre d'analyser la concentration des poudres P, voire également d'analyser la granulométrie du milieu granulaire formé dans l'enceinte de mélange E1.

Le système d'analyse de concentration Ac peut comporter une fibre optique de type émettrice (source de lumière éclairant le lit fluidisé Lf) et réceptrice (capteur). Il peut encore comporter une caméra. Il est alors à noter que la concentration des particules est fonction de la distance entre la fibre émettrice et la fibre réceptrice, de la distribution granulométrique des particules, de l'indice de réfraction du milieu granulaire, et de la longueur d'onde du faisceau incident dans le milieu de dispersion.

Par ailleurs, le dispositif 1 comporte le système de génération de vibrations Vb. Ce système comporte avantageusement des sonotrodes So.

Comme on peut le voir sur la figure 10, le système de génération de vibrations Vb est introduit au droit du lit fluidisé Lf au plus près de l'introduction de fluide cryogénique FC. En particulier, les sonotrodes So peuvent plonger au sein du lit fluidisé Lf.

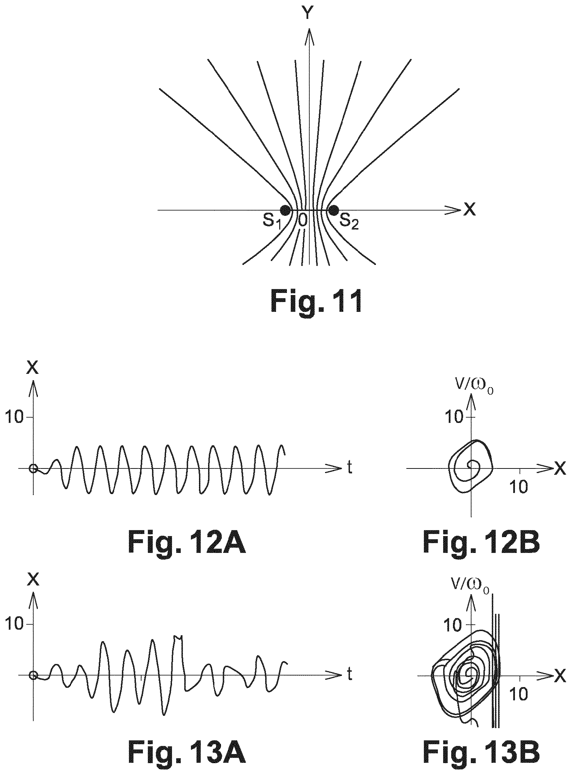

Les sonotrodes So peuvent être pilotées de manière indépendante par le système de pilotage Sp (non représenté sur la figure 10) pour induire un déphasage périodique des phases entre les sources de vibrations afin d'introduire des interférences instationnaires, de sorte à améliorer le mélange au sein du lit fluidisé Lf de poudres P. A ce titre, la figure 11 illustre une représentation des lignes d'interférences induites par deux sources vibratoires S1 et S2 ayant la même fréquence de pulsation.

Par ailleurs, de façon avantageuse, le pilotage des vibrations par le biais du système de pilotage Sp peut induire des signaux vibratoires chaotiques. Ceci peut être atteint en pilotant les sonotrodes So comme autant d'oscillateurs du type de Van der Pol. A ce titre, les figures 12A-12B et 13A-13B illustrent les formes des interférences au sein de la suspension de poudres P induites par deux sources ayant la même phase de pulsation, ces phases étant constantes. Plus précisément, les figures 12A et 12B illustrent la génération d'oscillations stables après convergence (a = 2,16, b = 2,28 et $w_0$ = 3), tandis que les figures 13A et 13B illustrent la génération d'oscillations quasi chaotiques d'un oscillateur de type Van der Pol, d'équation du type $x'' + ax'.(x^2/b^2 - 1) + w_0^2.x = 0$, par variation temporelle de la pulsation wo.

Il est à noter que, en faisant varier les phases des sources de vibrations, les interférences peuvent se déplacer d'une distance équivalente à l'ordre de grandeur de la longueur d'onde des vibrations injectées au sein du lit fluidisé Lf. Ceci permet alors un degré de mélange supplémentaire.

L'application de vibrations selon des oscillations complexes, notamment quasi chaotiques, oeuvre à un effet de mélange quasiment parfait.

Par ailleurs, il est également à noter que l'enceinte d'alimentation A1 des poudres P (non représentée sur la figure 10) peut permettre une alimentation par gravité, voire par un dispositif de type vis sans fin, voire encore par le biais d'un lit vibrant, par exemple.

De plus, de façon avantageuse, les poudres P peuvent être chargées électrostatiquement avec des charges opposées pour permettre lors de la mise en suspension d'obtenir une réagglomération différenciée.

Bien entendu, l'invention n'est pas limitée aux exemples de réalisation qui viennent d'être décrits. Diverses modifications peuvent y être apportées par l'homme du métier.

## Revendications

1. Dispositif (20) de granulation de poudres (P), notamment des poudres d'actinides, par atomisation cryogénique, **caractérisé en ce qu'**il comporte :

   - un dispositif (1) de mélange de poudres (P) par fluide cryogénique (FC), comportant au moins une enceinte de mélange (E1-En) des poudres (P), comportant un fluide cryogénique (FC),
   - un dispositif (10) d'atomisation d'une suspension de poudres (P) mélangées par le dispositif (1) de mélange de poudres (P) pour permettre une granulation des poudres (P), comportant :

   - des moyens de fractionnement de la suspension de poudres (P) permettant le réglage de la dimension des gouttelettes (Go) de poudres (P) à atomiser,
   - des moyens de réglage de l'humidité des poudres (P) mélangées et/ou de l'humidité de l'atmosphère d'atomisation.

2. Dispositif selon la revendication 1, **caractérisé en ce que** le dispositif (1) de mélange comporte en outre :

   - une enceinte d'alimentation (A1, A2) en poudres (P) pour permettre l'introduction des poudres (P) dans l'enceinte de mélange (E1-En),
   - des moyens d'agitation (2, 2a, 2b) dans l'enceinte de mélange (E1-En) pour permettre le mélange des poudres (P) mises en suspension dans le fluide cryogénique (FC).

3. Dispositif selon la revendication 2, **caractérisé en ce que** le dispositif (1) de mélange comporte des moyens de mélange (MG) de l'enceinte de mélange (E1-En) selon un mouvement gyroscopique.

4. Dispositif selon la revendication 2, **caractérisé en ce que** le dispositif (1) de mélange comporte :

   - une pluralité d'enceintes de mélange (E1-En) des poudres (P), disposées successivement en série les unes après les autres, l'enceinte d'alimentation (A1, A2) en poudres (P) permettant l'introduction des poudres (P) dans au moins la première enceinte de mélange (E1),
   - une pluralité de systèmes de restriction de passage (R1-Rn-1) des poudres (P), chaque système de restriction de passage (R1-Rn-1) étant situé entre deux enceintes de mélange (E1-En) successives, pour contraindre la distribution de poudres (P) d'une enceinte de mélange (E1-En) à la suivante,

   chaque enceinte de mélange (E1-En) comportant un fluide cryogénique (FC) et des moyens d'agitation (2, 2a, 2b) pour permettre le mélange des poudres (P) mises en suspension dans le fluide cryogénique (FC).

5. Dispositif selon l'une des revendications 2 à 4, **caractérisé en ce que** les moyens d'agitation comportent des mobiles de mélange (2a), notamment des pales, des turbines et/ou des mobiles à effet couette.

6. Dispositif selon l'une quelconque des revendications 2 à 5, **caractérisé en ce que** les moyens d'agitation comportent des moyens de génération de vibrations (2b), notamment de vibrations ultrasoniques, notamment des sonotrodes (2b).

**7.** Dispositif selon l'une quelconque des revendications 4 à 6, **caractérisé en ce que** les systèmes de restriction de passage (R1-Rn-1) comportent des tamis et/ou des diaphragmes.

**8.** Dispositif selon la revendication 1, **caractérisé en ce que** le dispositif (1) de mélange comporte en outre :

- une enceinte de mélange (E1) des poudres (P), comportant un fluide cryogénique (FC), pourvue de moyens pour former un lit de poudres fluidisé (Lf),
- une enceinte d'alimentation (A1) en poudres (P) pour permettre l'introduction des poudres (P) dans l'enceinte de mélange (E1),
- une enceinte d'alimentation (B1) en fluide cryogénique (FC) pour permettre l'introduction du fluide cryogénique (FC) dans l'enceinte de mélange (E1),
- un système de génération de vibrations (Vb) dans le lit de poudres fluidisé (Lf),
- un système de pilotage (Sp) du système de génération de vibrations (Vb),
- éventuellement, un système d'analyse de concentration (Ac) de la suspension de poudres (P) et de fluide cryogénique (FC) dans l'enceinte de mélange (E1), dont le fonctionnement est notamment piloté par le système de pilotage (Sp).

**9.** Dispositif selon la revendication 8, **caractérisé en ce que** l'enceinte de mélange (E1) comporte un système de distribution (Sd), notamment une grille ou une pièce frittée, du fluide cryogénique (FC) au travers du lit fluidisé (Lf) de poudres (P) pour permettre une répartition homogène du fluide cryogénique (FC) dans le lit fluidisé (Lf).

**10.** Dispositif selon la revendication 8 ou 9, **caractérisé en ce que** le système de génération de vibrations (Vb) est au moins partiellement situé dans le lit fluidisé (Lf) de poudres (P), le système de génération de vibrations (Vb) comportant notamment des sonotrodes (So) introduites dans le lit fluidisé (Lf) de poudres (P), les sonotrodes (So) étant notamment pilotées de manière indépendante par le système de pilotage (Sp) pour induire un déphasage périodique des phases entre les sonotrodes (So) afin d'introduire des interférences instationnaires améliorant le mélange au sein du lit fluidisé (Lf) de poudres (P), les sonotrodes (So) étant notamment configurées pour générer des oscillations pseudo-chaotiques de type de Van der Pol.

**11.** Dispositif selon l'une quelconque des revendications 2 à 10, **caractérisé en ce que** le dispositif de mélange (1) comporte un système de charge électrostatique (C+, C-) des poudres (P) destinées à être introduites dans la ou les enceintes de mélange (E1-En), une partie des poudres (P) étant notamment mise en contact avec une partie du système de charge électrostatique (C+) pour être chargée électrostatiquement de manière positive et l'autre partie des poudres (P) étant notamment mise en contact avec l'autre partie du système de charge électrostatique (C-) pour être chargée électrostatiquement de manière négative, afin de permettre une agglomération locale différenciée.

**12.** Procédé de granulation de poudres (P) par atomisation cryogénique, **caractérisé en ce qu'**il est mis en oeuvre au moyen d'un dispositif (20) selon l'une quelconque des revendications précédentes, et **en ce qu'**il comporte les étapes suivantes :

a) introduction de poudres (P) et de fluide cryogénique (FC) dans au moins une enceinte de mélange (E1-En) du dispositif (1) de mélange de poudres (P) par fluide cryogénique (FC) pour obtenir une suspension de poudres (P) et de fluide cryogénique (FC),
b) atomisation de la suspension de poudres (P) et de fluide cryogénique (FC) par le biais du dispositif (10) d'atomisation pour permettre une granulation des poudres (P),
c) obtention de granulés formés à partir des poudres (P).

**13.** Procédé selon la revendication 12, **caractérisé en ce qu'**au cours de la première étape a), les poudres (P) sont chargées électrostatiquement de manière opposée pour favoriser l'agglomération locale différenciée.

**Patentansprüche**

**1.** Vorrichtung (20) zum Granulieren von Pulvern (P), insbesondere von Aktinidenpulvern, durch kryogene Zerstäubung, **dadurch gekennzeichnet, dass** sie Folgendes umfasst:

- eine Mischvorrichtung (1) für Pulver (P) durch ein kryogenes Fluid (FC), die mindestens eine Mischkammer (E1-En) für die Pulver (P) umfasst, die ein kryogenes Fluid (FC) umfasst,
- eine Zerstäubungsvorrichtung (10) für eine Suspension aus Pulvern (P), die durch die Mischvorrichtung (1) für Pulver (P) gemischt wird, um eine Granulierung der Pulver (P) zu ermöglichen, und Folgendes umfasst:

- Fraktionierungsmittel für die Suspension aus Pulvern (P), die das Einstellen der Größe der Tröpfchen (Go) von zu zerstäubenden Pulvern (P) ermöglichen,
- Einstellungsmittel für die Feuchtigkeit der gemischten Pulver (P) und/oder der Feuchtigkeit der Zerstäubungsatmosphäre.

2.  Vorrichtung nach Anspruch 1, **dadurch gekennzeichnet, dass** die Mischvorrichtung (1) ferner Folgendes umfasst:

    - eine Zufuhrkammer (A1, A2) von Pulvern (P), um das Einbringen der Pulver (P) in die Mischkammer (E1-En) zu ermöglichen,
    - Rührmittel (2, 2a, 2b) in der Mischkammer (E1-En), um das Mischen der in dem kryogenen Fluid (FC) suspendierten Pulver (P) zu ermöglichen.

3.  Vorrichtung nach Anspruch 2, **dadurch gekennzeichnet, dass** die Mischvorrichtung (1) Mischmittel (MG) der Mischkammer (E1-En) in einer Kreiselbewegung umfasst.

4.  Vorrichtung nach Anspruch 2, **dadurch gekennzeichnet, dass** die Mischvorrichtung (1) Folgendes umfasst:

    - eine Vielzahl von Mischkammern (E1-En) für die Pulver (P), die nacheinander in Reihe angeordnet sind, wobei die Zufuhrkammer (A1, A2) von Pulvern (P) das Einbringen der Pulver (P) in mindestens die erste Mischkammer (E1) ermöglicht,
    - eine Vielzahl von Durchgangsbegrenzungssystemen (R1-Rn-1) für die Pulver (P), wobei sich jedes Durchgangsbegrenzungssystem (R1-Rn-1) zwischen zwei aufeinanderfolgenden Mischkammern (E1-En) befindet, um das Verteilen von Pulvern (P) von einer Mischkammer (E1-En) zur nächsten einzuschränken,

    wobei jede Mischkammer (E1-En) ein kryogenes Fluid (FC) und Rührmittel (2, 2a, 2b) umfasst, um das Mischen der in dem kryogenen Fluid (FC) suspendierten Pulver (P) zu ermöglichen.

5.  Vorrichtung nach einem der Ansprüche 2 bis 4, **dadurch gekennzeichnet, dass** die Rührmittel mobile Mischvorrichtungen (2a), insbesondere Schaufeln, Turbinen und/oder mobile Vorrichtungen mit Couette-Effekt umfassen.

6.  Vorrichtung nach einem der Ansprüche 2 bis 5, **dadurch gekennzeichnet, dass** die Rührmittel Vibrationserzeugungsmittel (2b), insbesondere von Ultraschallschwingungen, und insbesondere Sonotroden (2b) umfassen.

7.  Vorrichtung nach einem der Ansprüche 4 bis 6, **dadurch gekennzeichnet, dass** die Durchgangsbegrenzungssysteme (R1-Rn-1) Siebe und/oder Membranen umfassen.

8.  Vorrichtung nach Anspruch 1, **dadurch gekennzeichnet, dass** die Mischvorrichtung (1) ferner Folgendes umfasst:

    - eine Mischkammer (E1) für die Pulver (P), die ein kryogenes Fluid (FC) umfasst und mit Mitteln zum Bilden eines Wirbelschichtpulverbetts (Lf) ausgestattet ist,
    - eine Zufuhrkammer (A1) von Pulvern (P), um das Einbringen der Pulver (P) in die Mischkammer (E1) zu ermöglichen,
    - eine Zufuhrkammer (B1) von kryogenem Fluid (FC), um das Einbringen des kryogenen Fluids (FC) in die Mischkammer (E1) zu ermöglichen,
    - ein Vibrationserzeugungssystem (Vb) im Wirbelschichtpulverbett (Lf),
    - ein Steuerungssystem (Sp) für das Vibrationserzeugungssystem (Vb),
    - gegebenenfalls ein Konzentrationsanalysesystem (Ac) für die Suspension aus Pulvern (P) und kryogenem Fluid (FC) in der Mischkammer (E1), dessen Betrieb insbesondere von dem Steuerungssystem (Sp) gesteuert wird.

9.  Vorrichtung nach Anspruch 8, **dadurch gekennzeichnet, dass** die Mischkammer (E1) ein Verteilungssystem (Sd), insbesondere ein Gitter oder ein Sinterbauteil, für das kryogene Fluid (FC) durch das Wirbelbett (Lf) aus Pulvern (P) umfasst, um eine homogene Verteilung des kryogenen Fluids (FC) im Wirbelbett (Lf) zu ermöglichen.

10. Vorrichtung nach Anspruch 8 oder 9, **dadurch gekennzeichnet, dass** sich das Vibrationserzeugungssystem (Vb) mindestens teilweise im Wirbelbett (Lf) aus Pulvern (P) befindet, wobei das Vibrationserzeugungssystem (Vb) insbesondere Sonotroden (So) umfasst, die in das Wirbelbett (Lf) aus Pulvern (P) eingebracht werden, wobei die Sonotroden (So) unabhängig insbesondere vom Steuerungssystem (Sp) gesteuert werden, um eine periodische Phasenverschiebung der Phasen zwischen den Sonotroden (So) zu induzieren, um instationäre Interferenzen einzuführen, die das Mischen innerhalb des Wirbelbetts (Lf) aus Pulvern (P) verbessern, wobei die Sonotroden (So) insbesondere dazu konfiguriert sind, pseudochaotische Schwingungen vom Van-der-Pol-Typ zu erzeugen.

11. Vorrichtung nach einem der Ansprüche 2 bis 10, **dadurch gekennzeichnet, dass** die Mischvorrichtung (1) ein System zum elektrostatischen Aufladen (C+, C-) der Pulver (P) umfasst, die dazu bestimmt sind, in die eine oder mehrere Mischkammern (E1-En) eingeführt zu werden, wobei ein Teil der Pulver (P) insbesondere mit einem Teil des Systems zum elektrostatischen Aufladen (C+) in Kontakt gebracht wird, um positiv elektrostatisch aufgeladen zu werden, und der andere Teil der Pulver (P) insbesondere mit dem anderen Teil des Systems zum elektrostatischen Aufladen (C-) in Kontakt gebracht wird, um negativ elektrostatisch aufgeladen zu werden, um eine differenzierte lokale Agglomeration zu ermöglichen.

12. Verfahren zum Granulieren von Pulvern (P) durch kryogene Zerstäubung, **dadurch gekennzeichnet, dass** es mittels einer Vorrichtung (20) nach einem der vorhergehenden Ansprüche durchgeführt wird und dass es die folgenden Schritte umfasst:

a) Einbringen von Pulvern (P) und kryogenem Fluid (FC) in mindestens eine Mischkammer (E1-En) der Mischvorrichtung (1) für Pulver (P) durch ein kryogenes Fluid (FC), um eine Suspension aus Pulvern (P) und kryogenem Fluid (FC) zu erhalten,
b) Zerstäuben der Suspension aus Pulvern (P) und kryogenem Fluid (FC) mit Hilfe der Zerstäubungsvorrichtung (10), um ein Granulieren der Pulver (P) zu ermöglichen,
c) Erhalten von Granulat, das anhand der Pulver (P) gebildet wurde.

13. Verfahren nach Anspruch 12, **dadurch gekennzeichnet, dass** während des ersten Schritts a) die Pulver (P) entgegengesetzt elektrostatisch aufgeladen werden, um eine differenzierte lokale Agglomeration zu begünstigen.

**Claims**

1. A device (20) for granulating powders (P), in particular actinide powders, by cryogenic atomisation, **characterised in that** it includes:

- a device (1) for mixing powders (P) with cryogenic fluid (FC), including at least one chamber (E1-En) for mixing the powders (P), including a cryogenic fluid (FC),
- a device (10) for atomising a suspension of powders (P) mixed by the device (1) for mixing powders (P) to allow granulation of the powders (P), including:

- means for fractionating the suspension of powders (P) allowing the adjustment of the size of the droplets (Go) of powders (P) to be atomised,
- means for adjusting the humidity of the mixed powders (P) and/or the humidity of the atomisation atmosphere.

2. The device according to claim 1, **characterised in that** the mixing device (1) further includes:

- a powder (P) supply chamber (A1, A2) to allow the introduction of the powders (P) into the mixing chamber (E1-En),
- means (2, 2a, 2b) for stirring in the mixing chamber (E1-En) to allow mixing of the powders (P) suspended in the cryogenic fluid (FC).

3. The device according to claim 2, **characterised in that** the mixing device (1) includes means (MG) for mixing the mixing chamber (E1-En) according to a gyroscopic movement.

4. The device according to claim 2, **characterised in that** the mixing device (1) includes:

- a plurality of powder (P) mixing chambers (E1-En), disposed successively in series one after the other, the powder (P) supply chamber (A1, A2) allowing the introduction of the powders (P) into at least the first mixing chamber (E1),
- a plurality of powder (P) passage restriction systems (R1-Rn-1), each passage restriction system (R1-Rn-1) being located between two successive mixing chambers (E1-En), to constrain the distribution of powders (P) from one mixing chamber (E1-En) to the next,

each mixing chamber (E1-En) including a cryogenic fluid (FC) and stirring means (2, 2a, 2b) to allow mixing of the powders (P) suspended in the cryogenic fluid (FC).

5. The device according to one of claims 2 to 4, **characterised in that** the stirring means include mixing rotors (2a), in particular blades, turbines, and/or quilt effect rotors.

6. The device according to any one of claims 2 to 5, **characterised in that** the stirring means include means for generating vibrations (2b), in particular ultrasonic vibrations, in particular sonotrodes (2b).

7. The device according to any one of claims 4 to 6, **characterised in that** the passage restriction systems (R1-Rn-1) include sieves and/or diaphragms.

8. The device according to claim 1, **characterised in that** the mixing device (1) further includes:

- a powder (P) mixing chamber (E1), including a cryogenic fluid (FC), provided with means for forming a fluidised powder bed (Lf),
- a powder (P) supply chamber (A1) to allow the introduction of the powders (P) into the mixing chamber (E1),
- a cryogenic fluid (FC) supply chamber (B1) to allow the introduction of the cryogenic fluid (FC) into the mixing chamber (E1),
- a system (Vb) for generating vibrations in the fluidised powder bed (Lf),
- a system (Sp) for controlling the vibration generation system (Vb),
- possibly, a system (Ac) for analysing the concentration of the suspension of powders (P) and cryogenic fluid (FC) in the mixing chamber (E1), the operation of which is in particular controlled by the control system (Sp).

9. The device according to claim 8, **characterised in that** the mixing chamber (E1) includes a system (Sd), in particular a grid or a sintered part, for distributing the cryogenic fluid (FC) through the powder (P) fluidised bed (Lf) to allow a homogeneous distribution of the cryogenic fluid (FC) in the fluidised bed (Lf).

10. The device according to claim 8 or 9, **characterised in that** the vibration generation system (Vb) is at least partially located in the powder (P) fluidised bed (Lf), the vibration generation system (Vb) including in particular sonotrodes (So) introduced into the powder (P) fluidised bed (Lf), the sonotrodes (So) being in particular controlled independently by the control system (Sp) to induce a periodic phase shift between the sonotrodes (So) in order to introduce unsteady interference improving the mixing within the powder (P) fluidised bed (Lf), the sonotrodes (So) being in particular configured to generate pseudo-chaotic oscillations of the Van der Pol type.

11. The device according to any one of claims 2 to 10, **characterised in that** the mixing device (1) includes an electrostatic charging system (C+, C-) for the powders (P) intended to be introduced into the mixing chamber(s) (E1-En), a portion of the powders (P) being in particular contacted with a portion of the electrostatic charging system (C+) to be electrostatically positively charged and the other portion of the powders (P) being in particular contacted with the other portion of the electrostatic charging system (C-) to be electrostatically negatively charged, in order to allow differentiated local agglomeration.

12. A method for granulating powders (P) by cryogenic atomisation, **characterised in that** it is carried out by means of a device (20) according to any one of the preceding claims, and **in that** it includes the following steps:

a) introducing powders (P) and cryogenic fluid (FC) into at least one mixing chamber (E1-En) of the device (1) for mixing powders (P) with cryogenic fluid (FC) to obtain a suspension of powders (P) and cryogenic fluid (FC),
b) atomising the suspension of powders (P) and cryogenic fluid (FC) by means of the atomisation device (10) to allow granulation of the powders (P),
c) obtaining granules formed from the powders (P).

13. The method according to claim 12, **characterised in that** during the first step a), the powders (P) are electrostatically charged in an opposite manner to promote differentiated local agglomeration.

Fig. 1

Fig. 2

Fig. 3

Fig. 4

Fig. 5

Fig. 6

**Fig. 7A**   **Fig. 7B**   **Fig. 7C**

**Fig. 8**

**Fig. 9**

**Fig. 10**

Fig. 11

Fig. 12A

Fig. 12B

Fig. 13A

Fig. 13B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CA 2882302 A1
- WO 20060111266 A1
- WO 1999010092 A1

- EP 1137597 A1
- US 3321560 A
- US 20140000297 A1